# EUROPEAN PATENT APPLICATION

(11) **EP 4 095 108 A1**
(43) Date of publication of application: **30.11.2022**
(21) Application number: 21175650.7
(22) Date of filing: 25.05.2021
(51) Int. Cl.: C03B 37/05

(54) **BAFFLE RING**

(71) Applicant: ROCKWOOL A/S, 2640 Hedehusene (DK)
(72) Inventor: Sorensen, Jens Jorren, 2640 Hedehusene (DK)
(74) Representative: Windsor, Louise

(57) **Abstract**

A baffle ring (20) for a spinner wheel (3) of a fiberising apparatus, wherein the baffle ring is resilient and compressible to fit into and to be biased against the inner wall of the spinner wheel of the fiberising apparatus.

## Description

The present invention relates to a baffle ring for a cascade spinner fiberising apparatus, an improved fiberising apparatus for use in the manufacture of man-made vitreous fibres (MMVF), and a method of manufacture of man-made vitreous fibres (MMVF).

Spinning devices, known as fiberising apparatus or (cascade) spinners, are used for the manufacture of MMVF to produce insulation material; for example, to provide acoustic or heat insulating material from a mineral melt of stone or rock or a slag or glass melt. The fiberising apparatus have a set of rotors to spin the molten material or lava over a spinning wheel to produce a web-like insulation product. Each rotor wheel comprises a rotating shaft suspended between bearings and dampers are used to minimises the internal wear of the bearings by providing improved absorption of vibrations generated by unbalances of the spinning rotor. The molten stone or lava ("the melt") is thrown successively from a first rotor to the remaining rotors of the set and fibres are thrown off each wheel as each of the rotors rotate. The fibres are collected and carried away from the set of rotors for the manufacture of insulation products, such as stone wool insulation products.

The control of the high speed, and thereby the high acceleration force, of the spinner controls the physical and performance characteristics of the fibres and so the insulation that is produced. It has been found that by increasing the speed and acceleration force of the spinning device, the spun fibres can be made thinner and softer with improved and highly desirable heat insulation properties. It has been found that conduction in the spun fibre is less if the fibre is thinner and more air is held within an insulation product if it is made up of thinner fibres. The rotors within the spinners operate at very high speed. The scale of the apparatus and the high speed of spinning of fiberising apparatus exert a very high load on the moving parts and the bearings used.

Known spinners operate at high speeds of around 10,000 to 16,000 rpm to achieve the required very thin fibres for good heat insulation properties. Cooling water is essential for safe and efficient operation of the cascade spinner and is fed into each spinning wheel. When the wheel is rotating, the cooling water is forced against and so cools the inner surface of the spinning wheel. However, it has been found that at certain speeds, including high rotating speeds, the cooling water may contribute to unbalance. If there is any unbalance of the wheel, the cooling water will be displaced such that it will not have a uniform depth around the inner surface of the wheel. The cooling water will have a greater depth on the same side as the unbalance. It has been found that movement of the rotating cooling water layer, which is around the inner surface of the spinning wheel, may start to excite waves. It is these waves that have been found to contribute to unbalance of the wheel. Any source of instability or creation of vibration of the wheels increases the wear on the bearings. An increase in wear of the bearings increases the risk of failure of the fiberising apparatus. An improvement that reduces the risk of failure reduces the "down time" required for maintenance and significantly increases the volume of product that can be produced.

The present invention sets out to provide an improved fiberising apparatus, which addresses the above-described problems associated with unbalances caused by the cooling water in the wheels.

In one aspect, the invention provides a baffle ring for a spinner wheel of a fiberising apparatus, wherein the baffle ring is resilient and compressible to fit into and to be biased against the inner wall of the spinner wheel of the fiberising apparatus.

A resilient baffle ring can be compressed to mount the resilient ring against the inner surface of the spinner wheel. Once mounted, the resilient ring is biased against the inner surface of the spinner wheel in use, which eliminates the need for any connecting means between the baffle ring and the wheel. This is advantageous because any mechanical fixings or adhesive, between the baffle ring and the inner wheel surface, would be vulnerable to failure at the high speed and high acceleration force at which the fiberising apparatus operates.

Preferably, the baffle ring is shaped to form a plurality of baffle walls.

The shape of the baffle ring forms a series of baffle walls in contact with the inner wall of the wheel against which it is mounted. In use, when the wheel is spinning and cooling water is fed into the wheel, the rotating cooling water will be forced into separate compartments between adjacent baffle walls, whilst still being able to flow around the inner wall of the wheel ring. The size of each compartment formed by adjacent baffle walls is configured to prevent the generation of any wave effect in the cooling water. This prevents any unbalance of the rotating wheel being caused by the cooling water.

It has been found that the baffle ring of the present invention is an effective "breakwater" to prevent formation of waves in the cooling water used to cool the surface of the wheel. By preventing formation of waves, the stability of the spinning wheel is much improved. The possibility of vibration of the wheel/s leading to increased wear on the bearings is significantly reduced, which reduces the maintenance requirements and risk of failure of the apparatus due to worn bearings.

Preferably, the baffle ring comprises a continuous rod having a single join to form a ring.

It is understood that "continuous" refers to the baffle ring being formed of an unbroken whole without interruption between its joined ends.

In the context of the present invention, a "rod" is understood to be a bar having a uniform thickness and a length greater than its width.

Optionally, the baffle ring comprises a one-piece shaped rod.

The baffle ring needs to be carefully configured for the high rotation speeds of each wheel of the cascade spinner. If the baffle ring cannot withstand the high rotation speeds it will be destroyed or will disconnect from the inner surface of the wheel leading to machine failure. It has been found that a baffle ring formed of a single piece is less likely to break or disconnect from the inner surface of the wheel. The baffle ring of the present invention has a minimum or no joins along its length so that the potential for strain at the joints and the risk of cracks forming is minimised. By minimising the joint and ensuring the rotational symmetry of the baffle ring, the present invention avoids the potential for unbalance of the spinning wheel.

Preferably, the baffle ring comprises a continuous rod having a uniform cross-section.

Preferably, the baffle ring comprises a continuous rod having a circular cross-section.

Preferably, the baffle ring comprises a continuous rod having a circular cross section with a diameter of between about 3 mm and about 15 mm; more preferably, having a circular cross section with a diameter of between about 6 mm and about 8 mm.

Optionally, the baffle ring comprises a continuous rod having a rectangular cross-section.

Optionally, the baffle ring comprises a continuous rod having a rectangular cross-section with side lengths between about 6 mm and 8 mm.

The size of the baffle ring ensures that the depth of the baffle ring - i.e., its distance away from the inner wall of the rotating wheel, is less than the depth of the cooling water, which forms a layer around the inner surface of the spinner wheel when it is rotating. For example, the cooling water level is commonly between about 7-10mm. The baffle ring of the present invention does not affect the cooling of the wheel. The cooling water is still able to flow around the inner wall of the rotating wheel, but the depth of the baffle ring is sufficient to prevent the generation of waves in the standing water.

Preferably, the baffle ring comprises an undulated form.

It is understood that "undulated" refers to the shape of the baffle ring presenting a wave-like appearance that bends with successive curves in alternate directions.

Preferably, the baffle ring has a zig-zag formation.

Preferably, the baffle ring comprises a plurality of undulations.

Preferably, the baffle ring comprises a plurality of substantially triangular undulations.

Optionally, the baffle ring comprises a plurality of substantially rectangular undulations.

Preferably, the baffle ring comprises between four and eight substantially triangular undulations. More preferably, the baffle ring comprises six substantially triangular undulations.

The baffle ring of the present invention can be configured according to the size of the wheel ring in which it is to be fitted. More undulations; for example, more substantially triangular undulations, will make the baffle ring more resilient but may affect the circulation of the cooling water and the cooling of the wheel. It has been found that the number of undulations is a balance between:
i) increased resilience to allow ease of insertion of the baffle ring into the wheel ring and
ii) prevention of the excitation of waves in the cooling water without affecting circulation of the cooling water.

Preferably, the baffle ring is shaped to form peaks and troughs.

Preferably, each peak and each trough comprises a rounded apex.

Optionally, each peak and each trough is substantially rectangular.

Preferably, the angle at the apex of each substantially triangular undulation is between about 50 and about 60 degrees.

Preferably, the baffle ring is rotationally symmetric.

The baffle ring is carefully configured to prevent any unbalances in use when the baffle ring is secured within the rotating wheel ring.

Preferably, the baffle ring is compressible so that adjacent peaks move towards each other on compression of the baffle ring.

Preferably, the baffle ring comprises a first end and a second end wherein the first end is for insertion before the second end into a spinner wheel of a fiberising apparatus and the outer diameter of the first end is less than the outer diameter of the second end.

Preferably, the outer profile of the baffle ring is substantially conical; more preferably, the outer profile of the baffle ring is shaped as a truncated cone.

Preferably, the outer wall of the baffle ring is at an angle of between about 0-degrees and 15-degrees to the axis of the baffle ring.

The slant of the truncated cone shape of the baffle ring is carefully configured for ease of insertion of the device into the wheel ring, which is balanced against the secure fit of the baffle ring to the inner wall of the wheel in use.

Preferably, the outer diameter of the widest first end of the baffle ring is 20 to 50 mm greater than the inner diameter of the spinner wheel. If the inner diameter of the spinner wheel is 280 mm the outer diameter of the widest first end of the baffle ring is between about 300 mm and about 330 mm.

Preferably, the outer diameter of the narrower second end of the baffle ring is smaller than the inner diameter of the spinner wheel.

Preferably, the outer diameter of the narrower second end of the baffle ring is less than or equal to about 20 mm smaller than the inner diameter of the spinner wheel.

It has been found that the outer diameter of the narrower second end of the baffle ring being smaller than the inner diameter of the spinner wheel assists the installation the baffle ring in the spinner wheel.

Preferably, the baffle ring is made of stainless steel.

Preferably, the length of the continuous rod forming the baffle ring is between about 1.5 m and 2.5 m; more preferably about 2 m.

Preferably, the height of each peak and each trough is between about 140 mm and about 160 mm.

Preferably, the height of the baffle ring, i.e., the height of each peak and each trough corresponding to the axial height of the baffle ring, is slightly less than the axial height of the spinner wheel into which it is to be fitted.

In a further aspect, the invention provides a spinner wheel for a fiberising apparatus comprising a baffle ring as described herein on the inner surface of the spinner wheel wherein the baffle ring is resilient and compressible to fit into and to be biased against the inner wall of the spinner wheel.

The spinner wheel of the present invention having a resilient baffle ring prevents unbalances cause by excitation of waves in the cooling water. The improved spinner wheel can withstand the high acceleration force of the fiberising apparatus and the baffle ring remains securely in position without the use of additional adhesive or fixings.

Preferably, the spinner wheel for a fiberising apparatus rotates at rotation speeds of between about 8,000 rpm and 13,000 rpm.

In a further aspect, the invention provides a fiberising apparatus comprising a spinner wheel comprising a baffle ring as described herein on the inner surface of the spinner wheel wherein the baffle ring is resilient and compressible to fit into and to be biased against the inner wall of the spinner wheel.

In a further aspect the invention provides a method of manufacture of man-made vitreous fibres (MMVF) comprising:
providing a fiberising apparatus comprising a set of at least three rotors each mounted for rotation about a different substantially horizontal axis; wherein each rotor has a drive means and a spinner wheel, wherein at least one spinner wheel comprises a baffle ring as described herein on the inner surface of the spinner wheel, wherein the baffle ring is resilient and compressible to fit into and to be biased against the inner wall of the spinner wheel;
rotating the rotors;
providing a mineral melt for formation of man-made vitreous fibres (MMVF) wherein the melt is poured on to the periphery of the first rotor;
forming fibres from the rotating spinner wheels;
collecting the fibres formed.

For the purposes of clarity and a concise description, features are described herein as part of the same or separate embodiments; however, it will be appreciated that the scope of the invention may include embodiments having combinations of all or some of the features described.

The invention will now be described by way of example with reference to the accompanying drawings, in which: -
Figure 1 is a longitudinal cross-sectional view of a rotor of a fiberising apparatus into which the baffle ring of the present invention is incorporated;
Figure 2 is a perspective view of a baffle ring in accordance with an embodiment of the present invention;
Figure 3 is a view from above of the baffle ring of Figure 2;
Figure 4 is a perspective view showing the baffle ring of Figure 2 being placed inside a wheel of a fiberising apparatus; the unshaded baffle ring is shown prior to being compressed and inserted into the wheel ring and the shaded baffle ring is shown compressed and inside the wheel ring;
Figure 5 is a side view of the baffle ring of Figure 2;
Figure 6 is a schematic view from above of the baffle ring of Figure 2 showing the compression directions for fitting the baffle ring into the wheel of a fiberising apparatus.

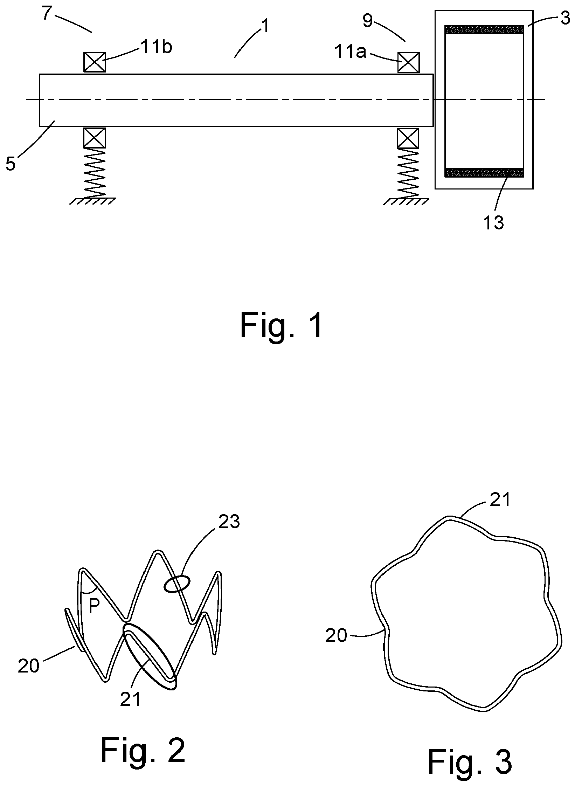

Referring to Figure 1, a longitudinal cross-section schematic of a rotor 1 and spinner wheel 3 of a cascade spinner is shown. A shaft 5 is longitudinally positioned between a drive end (DE) 7 and non-drive end (NDE) 9 of the rotor 1 and is substantially horizontal. Each rotor 1 has a high-speed motor connected at the drive end 7 by a flexible coupling and the wheel 3 is placed at the non-drive end 9 of the rotor 1. In use, the rotation speed of the wheel 3 is between about 8,000-13,000 rpm. In the example shown in Figure 1, the wheel has a diameter of 332mm. The circular end faces of the wheel 3 have a thickness of about 15mm and the cylindrical wall of the wheel has a thickness of about 25mm. A bearing assembly 11a, 11b is positioned at each of the NDE 9 and the DE 7 of the shaft. The first and second bearing assembly 11a, 11b are each placed adjacent to a "soft" suspension. The respective first and second soft suspensions act independently of each other. A cooling water supply (not shown) is connected to the NDE to feed cooling water 13 to the wheel 3. In use, when the wheel is rotating at speeds higher than 200rpm, the cooling water 13 will be distributed around the inner surface of the wheel 3. In use, when the wheel 3 is rotating, the cooling water 13 will be forced to the inner wall of the wheel 3. For example, cooling water 13 is distributed around the inner surface of the wheel 3 with a water depth of about 10mm. The water depth is ensured by openings (not shown) provided in the front end face of the wheel 3 at a distance of 10 mm from the inner surface of the wheel 3.

In use, the rotor 1 of Figure 1 is used in a cascade spinner fiberising apparatus having four rotors each attached to a respective wheel. Each wheel has a different diameter. For example, the wheel of the first rotor has an inner diameter of about 150 mm; the wheel of the second rotor has an inner diameter of about 200 mm; the wheel of the third rotor has an inner diameter of about 260 mm and the wheel of the fourth rotor has an inner diameter of about 280 mm. The present invention is described with respect to rotor 4 of a cascade spinner having an inner diameter of about 280 mm. It is to be understood that the baffle ring of the present invention can be used with each of the wheels to prevent excitation of waves in the cooling water and to improve the balance of the wheel.

As discussed with respect to Figures 2 to 6, the size of the baffle ring 20 is carefully configured according to the wheel in which it is to be fitted. In such a cascade spinner, rotors 1 and 3 rotate in an anticlockwise direction and rotors 2 and 4 rotate in a clockwise direction. The space between the outer surface of each mounted wheel 3 varies. In use, with the rotors rotating, a molten mineral melt of stone or rock or a slag or glass melt is poured through an inlet onto the periphery of the wheel of the first rotor, where the melt is accelerated and thrown onto the next spinner wheel. A small amount of fibres may be formed on the first wheel. The melt is then thrown successively to the wheels of the remaining three rotors and fibres are formed and collected each time. Most fibres are formed from the third and fourth wheel. Simultaneously, as the melt passes to the wheel of each successive rotor a high-pressure air flow through the spinner and along the wheel removes fibres from the wheels for collection.

Referring to Figure 2, the baffle ring 20 of the present invention comprises a stainless-steel rod shaped to form a ring having an undulating/zig-zag profile. In the embodiment shown, the length of the wire rod is about 2m, but it is understood that the length of the rod will vary according to the dimensions of the wheel ring in which the baffle ring 20 is to be inserted.

Referring to Figure 3, the wire rod has a uniform cross section. The stainless-steel spring material from which the baffle ring 20 is formed has a weight of approximately 0.8kg and the wire thickness has a diameter of about 6mm. In an alternative embodiment, the wire thickness has a diameter of about 8mm.

Referring to Figure 2, the resilient baffle ring 20 comprises a continuous rod having twelve transverse rod sections 21; i.e., the rod sections 21 form a zig-zag. The rod sections 21 are in a plane angled between about 0 degrees and about 15 degrees to the central perpendicular axis of the baffle ring 20, such that the baffle ring 20 resembles a "crown formation". Each rod section 21 meets the adjacent rod section to form an undulating series of zig-zag formations having peaks and troughs. In the embodiment shown there are six peaks and six troughs. Each peak and each trough has a curved apex and the angle P between adjacent rod sections 21 is between about 50 degrees and about 60 degrees. It is understood that in alternative embodiments, depending on the size of the baffle ring 20, which is determined by the size of the wheel ring in which it is to be fitted, the baffle ring could comprise more or less rod sections.

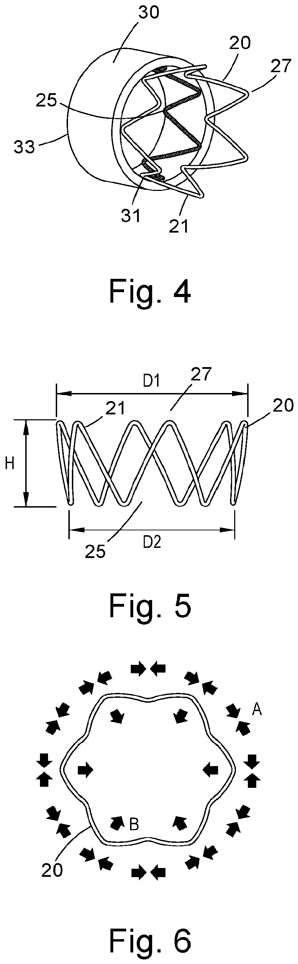

The resilient baffle ring 20 is preferably formed from a single continuous wire rod. In the embodiment shown in Figure 2, there is a single welded joint 23 holding the baffle ring 20 together. However, in alternative embodiments it is envisaged that the resilient baffle ring is formed from a single continuous wire rod that forms the baffle ring but does not comprise a joint, rather the ends of the wire meet each other when inserted into a wheel ring, as described with respect to Figure 4. In such alternative embodiments, a small gap between the ends of the wire rod is aligned on insertion of the baffle ring into the wheel ring.

In further alternative embodiments, the baffle ring comprises a laser-cut tube having a rectangular cross-section. As previously described the baffle ring comprises a zig-zag formation of a plurality of substantially triangular formations. Each peak and each trough has a curved apex. The shape of the undulating formation of the baffle ring can be varied provided that the shape forms a plurality of compartments against the inner wall of the wheel in use, as described with respect to Figure 4. This ensures that the cooling water can flow around the inner wall of the wheel ring to achieve cooling, but the shape and the size of the compartments is carefully configured to avoid the possibility of waves being excited in the cooling water.

Referring to Figures 4 and 5, the baffle ring 20 comprises a first end 25, which is inserted first into the wheel ring 30 to fit the baffle ring 20. A second end 27 is received into the wheel ring 30 after the first end 25 until the full height of the baffle ring 20 is received into the wheel ring 30. The baffle ring is held securely and is biased outwardly against the internal wall 33 of the wheel ring 30.

Referring to Figure 5, the baffle ring 20 has a height H of about 148mm. The diameter of the first end 25 of the baffle ring 20 is less than the diameter of the second end 27 of the baffle ring 20. In the embodiments shown, the first end 25 of the baffle ring 20 has a diameter of about 278mm and the second end 27 of the baffle ring 20 has a diameter of about 332mm. Thus, the outer profile of the baffle ring is shaped as a truncated cone with each of the six substantially triangular formations sloping inwardly towards the centre of the cone.

Referring to Figures 4 and 6, to insert the baffle ring 20 into the wheel ring 30 the first end 25 is inserted into a first end of the wheel ring 30. The conical shape of the resilient baffle ring 20 allows for easier insertion of the baffle ring 20 into the wheel ring 30. Once the first end 25 is inserted into the wheel ring, the sliding motion of each spring rod 21 moving across and into the wheel ring 30 acts to compress the baffle ring 20 as the entire height of the baffle ring 20 is pushed into the wheel ring 30 until the first end 25 of the baffle ring 20 is adjacent to the second end 33 of the wheel ring 30. The height of the baffle ring is slightly less than the height of the wheel ring into which it is inserted. For example, for a wheel of height about 158 mm, the baffle ring has a height of about 148 mm.

As shown in Figure 6, when the baffle ring 20 slides into the wheel ring 30 the force of insertion causes compression of the transverse sections 21 towards each other such that the angle P between adjacent rod sections 21 is reduced. The baffle ring 20 also compresses inwardly towards its central axis to reduce the diameter D1, D2 of the baffle ring.

In alternative embodiments of the present invention a tool is used to compress the baffle ring to allow insertion into the wheel ring.

Referring to Figure 4, when the baffle ring 20 is fully inserted into the wheel ring 30 the baffle ring is held securely in place against the inner wall of the wheel ring. Each transverse section 21 forms a compartment with the adjacent transverse section so that the cooling water can flow around the inner wall of the wheel ring to achieve cooling. However, the size of the compartments is carefully configured to avoid the possibility of waves being excited in the cooling water. Thus, in use, when the wheel ring is rotating, the cooling water will be uniformly distributed around the inner wall of the wheel ring preventing any unbalance. By preventing unbalance caused by the cooling water, any unwanted vibrations or uneven load on the dampers of the bearing assembly supporting the wheel will be avoided.

Within this specification, the term "about" means plus or minus 20%; more preferably, plus or minus 10%; even more preferably, plus or minus 5%; most preferably, plus or minus 2%.

Within this specification, the term "substantially" means a deviation of plus or minus 20%; more preferably, plus or minus 10%; even more preferably, plus or minus 5%; most preferably, plus or minus 2%.

The above-described embodiment has been given by way of example only, and the skilled reader will naturally appreciate that many variations could be made thereto without departing from the scope of the claims.

## Claims

1. A baffle ring for a spinner wheel of a fiberising apparatus, wherein the baffle ring is resilient and compressible to fit into and to be biased against the inner wall of the spinner wheel of the fiberising apparatus.

2. A baffle ring according to claim 1 wherein the baffle ring is shaped to form a plurality of baffle walls.

3. A baffle ring according to any preceding claim wherein the baffle ring comprises i) a continuous rod having a single join to form a ring, or ii) a one-piece shaped rod, and/or iii) a continuous rod having a uniform cross-section, and/or iv) a circular cross-section.

4. A baffle ring according to any preceding claim comprising a continuous rod having a circular cross section with a diameter of between about 3 mm and about 15 mm.

5. A baffle ring according to any preceding claim comprising an undulated form; optionally, comprising a zig-zag formation.

6. A baffle ring according to any preceding claim comprising a plurality of substantially triangular undulations, and/or wherein the baffle ring comprises between four and eight substantially triangular undulations; optionally, wherein the angle at the apex of each substantially triangular undulation is between about 50 and about 60 degrees.

7. A baffle ring according to any preceding claim wherein the baffle ring is shaped to form peaks and troughs and each peak and each trough comprises a rounded apex.

8. A baffle ring according to any preceding claim wherein the baffle ring is rotationally symmetric, and/or wherein the baffle ring is compressible so that adjacent peaks move towards each other on compression of the baffle ring.

9. A baffle ring according to any preceding claim comprising a first end and a second end wherein the first end is for insertion before the second end into a spinner wheel of a fiberising apparatus and the outer diameter of the first end is less than the outer diameter of the second end.

10. A baffle ring according to any preceding claim wherein the outer profile of the baffle ring is substantially conical; optionally, wherein i) the outer profile of the baffle ring is shaped as a truncated cone, and/or ii) the outer wall of the baffle ring is at an angle of between about 0-degrees and 15-degrees to the axis of the baffle ring, and/or iii) the outer diameter of the widest first end of the baffle ring is 20 to 50 mm greater than the inner diameter of the spinner wheel.

11. A baffle ring according to any of claim 9 or claim 10 wherein the outer diameter of the narrower second end of the baffle ring is smaller than the inner diameter of the spinner wheel; optionally, wherein the outer diameter of the narrower second end of the baffle ring is less than or equal to about 20 mm smaller than the inner diameter of the spinner wheel.

12. A baffle ring according to any preceding claim comprising a continuous rod wherein the length of the continuous rod forming the baffle ring is between about 1.5 m and 2.5 m and/or wherein the height of the baffle ring is slightly less than the axial height of the spinner wheel into which it is to be fitted.

13. A spinner wheel for a fiberising apparatus comprising a baffle ring according to any preceding claim on the inner surface of the spinner wheel wherein the baffle ring is resilient and compressible to fit into and to be biased against the inner wall of the spinner wheel.

14. A fiberising apparatus comprising a spinner wheel and further comprising a baffle ring according to any of claims 1 to 12 on the inner surface of the spinner wheel wherein the baffle ring is resilient and compressible to fit into and to be biased against the inner wall of the spinner wheel.

15. A method of manufacture of man-made vitreous fibres (MMVF) comprising:
providing a fiberising apparatus comprising a set of at least three rotors each mounted for rotation about a different substantially horizontal axis;
wherein each rotor has a drive means and a spinner wheel,
wherein at least one spinner wheel comprises a baffle ring according to any of claims 1 to 12 on the inner surface of the spinner wheel, wherein the baffle ring is resilient and compressible to fit into and to be biased against the inner wall of the spinner wheel;
rotating the rotors;
providing a mineral melt for formation of man-made vitreous fibres (MMVF) wherein the melt is poured on to the periphery of the first rotor;
forming fibres from the rotating spinner wheels;
collecting the fibres formed.
